# EUROPEAN PATENT APPLICATION

(11) **EP 4 750 007 A1**
(43) Date of publication of application: **27.05.2026**
(21) Application number: 25215298.8
(22) Date of filing: 12.11.2025
(51) Int. Cl.: H04L 25/02

(54) **SYSTEM AND METHODS FOR PROCESSING A RADIO FREQUENCY SIGNAL**

(30) Priority: 20.11.2024 US 202463722791 P
(71) Applicant: QORVO US, INC., Greensboro, NC 27409 (US)
(72) Inventor: CAVALIERE, Marco, Greensboro, 27409 (US); CUANACHAIN, Oisín Aodh Ó, Greensboro, 27409 (US)
(74) Representative: D Young & Co LLP

(57) **Abstract**

A method for processing a RF signal. The method includes receiving the signal having a sequence of chips, sampling the signal to generate a sampled signal, generating, based on the sequence of chips, a cancellation signal, subtracting the cancellation signal from the sampled signal to generate a cancelled signal, and performing an accumulation based on the cancelled signal to generate a channel impulse response (CIR) estimation.

## Description

### FIELD OF THE DISCLOSURE

The present disclosure relates to channel estimation in ultra-wideband (UWB) communication, in particular, to system and methods for processing a radio frequency (RF) signal.

### BACKGROUND

Ultra-wideband (UWB) generally refers to a wireless communication technology that uses a wide bandwidth, typically about 500MHz or larger, or has a 10dB bandwidth greater than 20% of the center frequency. Impulse UWB (IR-UWB) is a specific case of UWB in which the signal is transmitted by very short pulses (in the order of nano seconds). It is particularly adapted for ranging or sensing application as the pulses are robust against multipath. Another advantage of IR-UWB is its ability to transmit data with very low power consumption.

Ranging is a process of determining the distance between two devices using UWB technology. In current wireless communication systems, time-of-flight (TOF) is often employed to determine the distance between two devices/nodes in a UWB communication. A pseudo-random cipher code (e.g., a scrambled timestamp sequence or STS) may be generated and transmitted between the two devices for the computation of a channel impulse response (CIR) to prevent the TOF result impacted by an attacker. However, there can be a tradeoff between security and detectability of signals using STS. When a receiver raises its security threshold to block risky signals (e.g., an attack signal), useful signals can be filtered out. Thus, methods and systems that can alleviate the tradeoff is desired.

### SUMMARY

Aspects of the present disclosure provide a method for processing a signal. The method includes receiving the signal including a sequence of chips; sampling the signal to generate a sampled signal; generating, based on the sequence of chips, a cancellation signal; subtracting the cancellation signal from the sampled signal to generate a cancelled signal; and performing an accumulation based on the cancelled signal to generate a channel impulse response (CIR) estimation.

In some embodiments, the subtracting of the cancellation signal from the sampled signal includes subtracting a real component of the cancellation signal from a real component of the sampled signal, and subtracting an imaginary component of the cancellation signal from an imaginary component of the sampled signal.

In some embodiments, the generating of the cancellation signal includes applying a cancellation function on the sequence of chip to generate an initial cancellation signal that includes a real component and an imaginary component, and applying an rotation operation on the real component and the imaginary component of the initial cancellation signal to apply a phase offset on the initial cancellation signal and generate the cancellation signal, such that a phase of the cancellation signal matches a phase of the sampled signal.

In some embodiments, the sampling of the signal to generate the sampled signal includes sampling the signal to generate an initial sampled signal that includes a real component and an imaginary component, and performing a de-rotation operation on the real component and the imaginary component of the initial sampled signal to remove a carrier frequency offset (CFO) and generate the sampled signal.

In some embodiments, the method further includes applying a saturation operation on the cancelled signal to generate a saturated signal, wherein an amplitude of the saturated signal is equal to or lower than a saturation level.

In some embodiments, the applying of the saturation operation includes applying a monotonic function on the cancelled signal, the monotonic function being within the saturation level.

In some embodiments, the monotonic function includes a clipping function.

In some embodiments, the method further includes performing a cross-correlation operation between the saturated signal and the sequence of chips to generate a correlated signal.

In some embodiments, the method further includes performing a de-rotation operation to remove a carrier frequency offset (CFO) and generate a de-rotated signal as an input of an accumulation operation to generate the CIR estimation.

In some embodiments, the method further includes performing an accumulation using the correlated signal as an input to generate the CIR.

In some embodiments, the sequence of chips includes a scrambled time sequence (STS).

In some embodiments, the cancellation function includes at least one of a single finite impulse response (FIR) filter, a double FIR filter, or an infinite impulse response (IIR) filter. In some embodiments, the single FIR filter, the double FIR filter, and/or the IIR filter can each individually function as a cancellation function. In some embodiments, one or more single FIR filters, double FIR filters, and/or IIR filters can be connected in cascade to function as a cancellation function.

In some embodiments, the method further includes generating the cancellation function by: performing an accumulation operation on a synchronization header (SYNC) field of the signal to generate a second CIR estimation; performing a tap selection operation to select a tap above a predetermined threshold; and determining coefficients of the CF based on indices of the selected tap. In some embodiments, the generation of the cancellation function can be done at the end of the SYNC or during the reception of SYNC when the CIR quality is deemed sufficient.

In some embodiments, the method further includes generating the cancellation function by: performing an accumulation operation on the same STS field of the signal to generate an initial CIR estimation; performing a tap selection operation to select a tap above a predetermined threshold; and determining coefficients of the CF based on indices of the selected tap during STS reception when the CIR quality is deemed sufficient. That is, some STS symbols can be used to generate the cancellation function, which can be applied to the remaining STS symbols.

In some embodiments, the method further includes generating the cancellation function by: performing cross-correlation operation between a synchronization header (SYNC) field of the signal and a predetermined SYNC field to generate a second correlated signal; applying an adaptive filter (AF) on the second correlated signal to generate coefficients of the CF. [00XX]In some embodiments, the method further includes generating the cancellation function by: applying an adaptive filter (AF) on the samples synchronization header (SYNC) field of the signal to generate coefficients of the CF. That is, the AF can also be used in the time domain, before the correlation. The AF may adapt until the chips in the SYNC symbols are cancelled.

In some embodiments, the AF is based on an adaptive algorithm that includes a least mean square (LMS) algorithm.

In some embodiments, the method further includes generating the cancellation function by: performing cross-correlation operation between the received sequence of chips and an original sequence of chips to generate a third correlated signal; and applying an adaptive filter (AF) on the third correlated signal to generate coefficients of the CF. In some embodiments, the method further includes generating the cancellation function by: applying an adaptive filter (AF) on the received sequence of chips to generate coefficients of the CF. That is, the AF can also be used in the time domain, before the correlation. The AF may adapt until the chips in the STS symbols are cancelled.

In some embodiments, the method further includes: generating a reference channel impulse response (CIR) estimate; and comparing the CIR estimate with the reference CIR estimate to obtain a first path (FP) signal in the reference CIR estimate.

In some embodiments, the generating of the reference CIR estimate includes applying the cancellation function on the sequence of chip to generate the initial cancellation signal that includes the real component and the imaginary component; applying an rotation operation on the real component and the imaginary component of the initial cancellation signal to apply a phase offset on the initial cancellation signal and generate a rotated signal; scaling the rotated signal by a factor equal to a total number of chips in the sequence to generate a scaled signal; performing a de-rotation operation on the scaled signal to generate a second de-rotated signal; and accumulating the second de-rotated signal to generate the reference CIR estimate.

In some embodiments, the generating of the reference CIR estimate includes applying the cancellation function on the sequence of chip to generate the initial cancellation signal that includes the real component and the imaginary component; scaling the initial cancellation signal by a factor equal to a total number of chips in the sequence to generate a scaled signal; and accumulating the scaled signal to generate the reference CIR estimate.

Aspects of the present disclosure provide a ultra-wideband (UWB) receiver. The UWB receiver includes an analog-to-digital converter (ADC), wherein the receiver is configured to: receive, at the ADC, a signal comprising a sequence of chips; sample, by the ADC, the signal to generate a sampled signal; generate, based on the sequence of chips, a cancellation signal; subtract the cancellation signal from the sampled signal to generate a cancelled signal; and perform an accumulation based on the cancelled signal to generate a channel impulse response (CIR) estimation.

In some embodiments, the subtracting of the cancellation signal from the sampled signal includes subtracting a real component of the cancellation signal from a real component of the sampled signal, and subtracting an imaginary component of the cancellation signal from an imaginary component of the sampled signal.

In some embodiments, the generating of the cancellation signal includes applying a cancellation function on the sequence of chip to generate an initial cancellation signal that includes a real component and an imaginary component, and applying an rotation operation on the real component and the imaginary component of the initial cancellation signal to apply a phase offset on the initial cancellation signal and generate the cancellation signal, such that a phase of the cancellation signal matches a phase of the sampled signal.

In some embodiments, the sampling of the signal to generate the sampled signal includes sampling the signal to generate an initial sampled signal that includes a real component and an imaginary component, and performing a de-rotation operation on the real component and the imaginary component of the initial sampled signal to remove a carrier frequency offset (CFO) and generate the sampled signal.

In some embodiments, the operations further include applying a saturation operation on the cancelled signal to generate a saturated signal, wherein an amplitude of the saturated signal is equal to or lower than a saturation level.

In some embodiments, the applying of the saturation operation includes applying a monotonic function on the cancelled signal, the monotonic function being within the saturation level.

In some embodiments, the monotonic function includes a clipping function.

In some embodiments, the method further includes performing a cross-correlation operation between the saturated signal and the sequence of chips to generate a correlated signal.

In some embodiments, the operations further include performing a de-rotation operation to remove a carrier frequency offset (CFO) and generate a de-rotated signal as an input of an accumulation operation to generate the CIR estimation.

In some embodiments, the operations further include performing an accumulation using the correlated signal as an input to generate the CIR estimation.

In some embodiments, the sequence of chips includes a scrambled time sequence (STS).

In some embodiments, the cancellation function includes at least one of a single finite impulse response (FIR) filter, a double FIR filter, or an infinite impulse response (IIR) filter.

In some embodiments, the operations further include generating the cancellation function by: performing an accumulation operation on a synchronization header (SYNC) field of the signal to generate a second CIR estimation; performing a tap selection operation to select a tap above a predetermined threshold; and determining coefficients of the CF based on indices of the selected tap.

In some embodiments, the operations further include generating the cancellation function by: performing cross-correlation operation between a synchronization header (SYNC) field of the signal and a predetermined SYNC field to generate a second correlated signal; applying an adaptive filter (AF) on the second correlated signal to generate coefficients of the CF.

In some embodiments, the AF is based on an adaptive algorithm that includes a least mean square (LMS) algorithm.

In some embodiments, the operations further include generating the cancellation function by: performing cross-correlation operation between the received sequence of chips and an original sequence of chips to generate a third correlated signal; and applying an adaptive filter (AF) on the third correlated signal to generate coefficients of the CF.

In some embodiments, the operations further include: generating a reference channel impulse response (CIR) estimate; and comparing the CIR estimate with the reference CIR estimate to obtain a first path (FP) signal in the reference CIR estimate.

In some embodiments, the generating of the reference CIR estimate includes applying the cancellation function on the sequence of chip to generate the initial cancellation signal that includes the real component and the imaginary component; applying an rotation operation on the real component and the imaginary component of the initial cancellation signal to apply a phase offset on the initial cancellation signal and generate a rotated signal; scaling the rotated signal by a factor equal to a total number of chips in the sequence to generate a scaled signal; performing a de-rotation operation on the scaled signal to generate a second de-rotated signal; and accumulating the second de-rotated signal to generate the reference CIR estimate.

In some embodiments, the generating of the reference CIR estimate includes applying the cancellation function on the sequence of chip to generate the initial cancellation signal that includes the real component and the imaginary component; scaling the initial cancellation signal by a factor equal to a total number of chips in the sequence to generate a scaled signal; and accumulating the scaled signal to generate the reference CIR estimate.

Aspects of the present disclosure provide a computer-readable medium (CRM) having program code encoded thereon. The program code includes code for causing an ultra-wideband (UWB) device to receive a signal having a sequence of chips; code for causing the UWB device to sample the signal to generate a sampled signal; code for causing the UWB device to generate, based on the sequence of chips, a cancellation signal; code for causing the UWB device to subtract the cancellation signal from the sampled signal to generate a cancelled signal; and code for causing the UWB device to perform an accumulation based on the cancelled signal to generate a channel impulse response (CIR) estimation. Additionally, or alternatively, a computer-readable medium can include transient media such as carrier waves and transmission media.

In some embodiments, the code for causing the UWB device to subtract the cancellation signal from the sampled signal includes code for causing the UWB device to subtract a real component of the cancellation signal from a real component of the sampled signal; and code for causing the UWB device to subtract an imaginary component of the cancellation signal from an imaginary component of the sampled signal.

In some embodiments, the code for causing the UWB device to generate the cancellation signal includes code for causing the UWB device to apply a cancellation function (CF) on the sequence of chip to generate an initial cancellation signal that comprises a real component and an imaginary component; and code for causing the UWB device to apply an rotation operation on the real component and the imaginary component of the initial cancellation signal to apply a phase offset on the initial cancellation signal and generate the cancellation signal, such that a phase of the cancellation signal matches a phase of the sampled signal.

In some embodiments, the code for causing the UWB device to sample the signal to generate the sampled signal includes code for causing the UWB device to sample the signal to generate an initial sampled signal that comprises a real component and an imaginary component; and code for causing the UWB device to perform a de-rotation operation on the real component and the imaginary component of the initial sampled signal to remove a carrier frequency offset (CFO) and generate the sampled signal.

In some embodiments, the CRM further includes code for causing the UWB device to apply a saturation operation on the cancelled signal to generate a saturated signal, wherein an amplitude of the saturated signal is equal to or lower than a saturation level.

In some embodiments, the code for causing the UWB device to apply the saturation operation comprises code for causing the UWB device to apply a monotonic function on the cancelled signal, the monotonic function being within the saturation level.

In some embodiments, the monotonic function comprises a clipping function.

Those skilled in the art will appreciate the scope of the present disclosure and realize additional aspects thereof after reading the following detailed description of the preferred embodiments in association with the accompanying drawing figures.

### BRIEF DESCRIPTION OF THE DRAWING FIGURES

The accompanying drawing figures incorporated in and forming a part of this specification illustrate several aspects of the disclosure, and together with the description, serve to explain the principles of the disclosure.
FIG. 1 illustrates a block diagram of a communication system having an example receiver, according to some embodiments of the present disclosure.
FIG. 2A illustrates a block diagram of an example receiver with a cancellation function, according to some embodiments of the present disclosure.
FIG. 2B illustrates a block diagram of another example receiver with a cancellation function, according to some embodiments of the present disclosure.
FIG. 2C shows experimental results of CIR estimates using an existing receiver and an example receiver of the present disclosure, according to some embodiments of the present disclosure.
FIG. 2D illustrates a block diagram of another example receiver with a cancellation function, according to some embodiments of the present disclosure.
FIGS. 3A-3E each illustrates a block diagram of a different example cancellation function generation module, according to some embodiments of the present disclosure.
FIG. 3F shows coefficients of an example cancellation function, according to some embodiments of the present disclosure.
FIGS. 4A and 4B each illustrates a block diagram of a different example path recovering module, according to some embodiments of the present disclosure.
FIG. 4C shows experimental results of CIR estimates using an existing receiver and example receiver of the present disclosure, according to some embodiments of the present disclosure.
FIG. 5 illustrates a method for processing a signal using an example receiver of the present disclosure, according to some aspects of the present disclosure.

### DETAILED DESCRIPTION

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein. Additionally, like reference numerals denote like features throughout specification and drawings.

It should be appreciated that the blocks in each signaling diagram or flowchart and combinations of the signaling diagrams or flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each signaling diagram or flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction for performing the functions described in connection with a block(s) in each signaling diagram or flowchart. Since the computer program instructions may be equipped in a computer or other programmable data processing devices, instructions that generate a process executed by a computer as a series of operational steps are performed by the computer or other programmable data processing devices and operate the computer or other programmable data processing devices may provide steps for executing the functions described in connection with a block(s) in each signaling diagram or flowchart.

Each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

Hereinafter, embodiments are described in detail with reference to the accompanying drawings. Further, although a communication system using ultra-wideband (UWB) is described in connection with embodiments, as an example, the embodiments may also apply to other communication systems with similar technical background or features. For example, a communication system using Bluetooth or ZigBee may be included therein. Further, embodiments may be modified in such a range as not to significantly depart from the scope of the present disclosure under the determination by one of ordinary skill in the art and such modifications may be applicable to other communication systems.

UWB may refer to a short-range high-rate wireless communication technology using a wide frequency band of several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known, also referred to as anchor devices). The present disclosure assumes that the user is carrying a device capable of communicating through UWB (referred to as "UWB-enabled device" or simply as "UWB device").

In this disclosure, a symbol and a sequence may each refer to a plurality of chips (e.g., -1s and 1s). In some embodiments, a sequence includes one or more symbols.

In some communication systems, a scrambled timestamp sequence (STS), generated cryptographically, can be used to generate the CIR, which reflects the condition of the UWB channel between a receiver and a transmitter. However, an STS often cannot guarantee a certain normalized effective false acceptance (NEFA) rate at the physical (PHY) layer. To guarantee the desired NEFA (NEFA*), the detection threshold often needs to be set as a fraction of the analog-to-digital converter (ADC) full-scale range. The fraction may depend on NEFA* and the total number of UWB pulses (P) in STS sequence as examples. A detection threshold defined in this way may be the minimum secure detection threshold that can guarantee NEFA <= NEFA*. However, legitimate signals below the secure threshold are not detected or are be rejected. Therefore, the receiver performance is limited, especially in non-line-of-sight (NLOS) conditions.

An STS may be represented as a sequence of pseudo-random values, where each value is +1 or -1 with equal probability. After sharing a cryptographic key, two UWB-enabled devices can generate the same sequence (e.g., STS). The transmitter (e.g., transmitting device) transmits a sequence of UWB pulses with polarity according to the STS. The signal propagates from the transmitter to the receiver (e.g., receiving device) and can be attenuated, delayed, and reflected following different paths. In some embodiments, the receiver cross-correlates the incoming signal with the known STS to separate and distinguish the different paths. The first path (FP) reaching the receiver carries information about the distance between the two devices (D).

Several proximity-based services require the accurate estimation of D. An over-estimation of D can cause a denial of service (the service is denied when it should be allowed), while an under-estimation of D causes a lack of security (the service is allowed when it should be denied).

The FP dynamic range (FPDR) is a measure of the receiver performance and may indicate the weakest FP detected with a probability > 99%. FPDR may be expressed as the ratio in dB between the FP and the strongest path(s) in the received UWB signal, which is defined as the main path or multiple paths (MP). The NEFA is a measure of the receiver security and indicates the probability of FP false acceptance within a critical search window (CSW). The CSW is typically before the MP.

Without loss of generality, it is considered that the ADC upper and lower extremes to be encoded as +1 and -1, respectively. Therefore, in this scenario, the maximum signal after cross-correlation may have magnitude equal to P, where P is the total number of UWB pulses in the STS sequence.

An attacker, assuming attempting to use an attack sequence (e.g., an attack signal) to hack into the receiver, has no information about the legitimate STS, hence the cross-correlation between the attack sequence and the legitimate STS is random and serially uncorrelated with zero mean and finite variance. After the ADC, the attack sequence pulses are bounded by the ADC extremes, and it can be proven that the probability distribution of the attack sidelobes magnitude is upper bounded by a Rayleigh distribution with scale parameter S = sqrt(2×P).

In other words, and without being bound by theory, NEFA <= exp(-T²/(2×S²)) and it is possible to calculate the minimum secure threshold T from the required NEFA*. For example, if NEFA* = 2⁻⁴⁸, T = sqrt(48×2×log2×S²) ≈ 8.16×S. To summarize, the attack sidelobes are proportional to S, while legitimate signals are proportional to P, and the higher the security level required, the higher the secure threshold T. FPDR can also be important in performance analysis.

An FP with a magnitude equal to the secure threshold has a 50% probability of being detected and accepted. This is because sidelobes of other paths and noise add to the FP, interfering constructively or destructively with equal probability. In general, the sidelobes of the main path or multiple paths (MP) are dominant. In the case of destructive interference, the MP sidelobe that interferes with the FP has an equal and opposite phase.

To guarantee an FP detection rate > 99%, the target path must typically be at least 2.33×S above the threshold T. For example, if P = 4096, S = sqrt(2×P) = 90.51, and the required security level is NEFA* = 2⁻⁴⁸, the secure threshold is calculated as T = sqrt(48×2×log 2) × S ≈ 738, and the 1% FP detection is calculated as T + 2.33×S ≈ 949.

The largest dynamic range (DR) is obtained if the ADC full-scale range is adapted to the MP. In this case, following the example above, the MP magnitude = 4096 and DR = dB(949/4096) ≈ -12.7 dB. Similarly, for NEFA* = 2⁻²⁰ and NEFA* = 2⁻¹⁰, DR ≈ -15.5 dB and DR ≈ -17.5 dB are obtained, respectively.

The DR may be improved if the received signal is allowed to exceed the ADC extremes because this would cause a gain to the weaker signals and not to the attack pulses, that already saturate the ADC. For example, if the ADC full-scale range is adapted to half of the MP, the FPDR improves by 6 db. I However, this performance cannot be guaranteed: if the FP and the MP pulses collide, the FP signal will disappear because of ADC saturation.

To summarize, the higher the security level required, the lower the guaranteed FPDR, the FPDR can be improved but not guaranteed by ADC saturation, and the FPDR may improve by about 3 dB every time the number of pulses P is doubled.

The present disclosure proposes methods to improve FPDR and detect FP more effectively. The methods include estimating the interfering paths and cancelling them from the signal. In this way, performance loss due to destructive interference can be avoided, and the performance of the receiver can be improved by signal saturation even if the FP and the MP pulses collide. The present disclosure provides a technical solution that can lower the detection threshold to improve the receiver performance, without compromising security. The technical solutions presented herein facilitate easier detection of the desired signals, e.g., FP signal, which can be used to compute the direct distance between the transmitter and the receiver. The technical solutions are achieved by the cancellation of undesired signals. In ultra-wideband (UWB) security, the solutions allow reducing the effective ADC full-scale range hence the secure threshold. In UWB sensing, the solutions help remove the leakage signal without the need for post-processing techniques.

In the present disclosure, a signal (e.g., UWB signal) sampled by the ADC of a receiver may be cancelled by a cancellation signal. The cancellation can remove certain undesired signals, e.g., MP signals. In some embodiments, the cancelled signal is then clipped by undergoing a saturation operation to limit any strong undesired signals (e.g., attack signals) that are not cancelled. The saturated signal may be then cross-correlated with the STS to generate a correlated signal, which is a replica of the signal without the cancelled undesired signals and with the clipped strong signal. The correlated signal may then be accumulated to generate a channel impulse response (CIR) estimate, which can be compared with a reference CIR estimate (e.g., without the cancellation and the clipping/saturation) to obtain information on the FP signal. In various embodiments, the reference CIR estimate is generated using a receiver without the cancellation or the clipping, or using a path recovery module of the present disclosure.

In some embodiments, the cancellation is obtained by first applying a cancellation function (CF) on the STS to generate a time domain signal. The time domain signal, may or may not be processed, can be used to combine with or cancel the sampled signal. The cancellation function may have a filter architecture, of which the coefficients are generated using various ways provided by this disclosure, such as based on a synchronization (SYNC) field of the packet or the STS.

Some elements of a technical solution may include the following:
First, a CF can be generated or estimated from a SYNC CIR. Digital cancellation and/or analog cancellation can be performed before cross-correlation. Methods for analog cancellation are provided. Second , an adaptive algorithm can be used for the estimation of a CF. The CF can include a single finite impulse response (FIR) filter, a double FIR filter, or an infinite impulse response (IIR) filter. By adaptive analogue cancellation of the stronger signals (e.g., noise and/or high-power attack signal), the ADC range can be improved/optimized for the weaker signals, increasing the effective number of ADC bits.

Further, processing operations such as de-rotation, resampling, dithering, and/or quantization of CF can be used on the signal before accumulation. Alternatively, rotation and resampling of digital samples can be used on the signal before accumulation. Processing operations such as rotation and de-rotation can be applied on individual samples, block of samples, or units. Real-time saturation is used to saturated signals of strong amplitudes.

Recovery of cancelled signal can be used to obtain FP information in the signal. Alternatively, additional delay line, additional correlator, and/or additional CIR can be used.

Further, carrier frequency offset (CFO)-induced sidelobes are reduced.

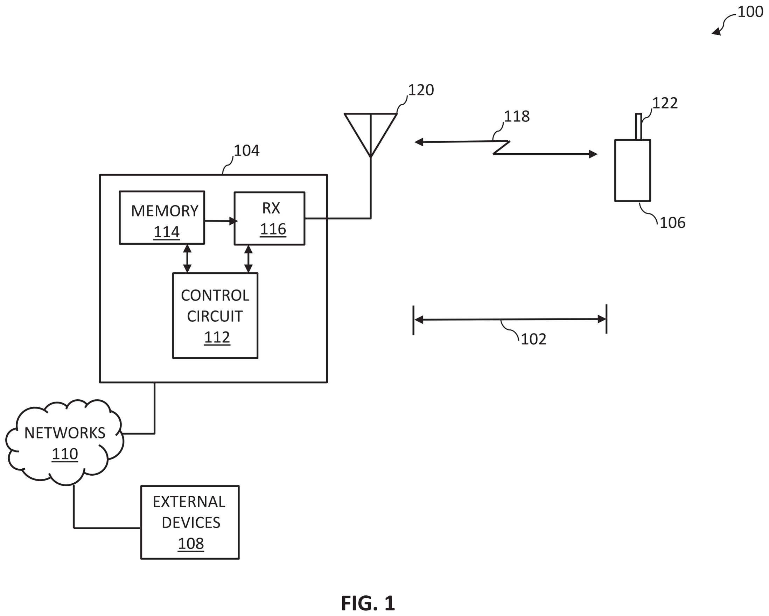

FIG. 1 illustrates an example communication system 100 include a first device 104 and a second device 106, according to some embodiments. In some embodiments, communication system 100 may include as a location-determining feature that determines a distance 102 between first device 104 and second device 106. In some embodiments, first device 104 may be a source, while second device 106 may include a mobile device. First device 104 and second device 106 may communicate with each other through wireless communication such as UWB. First device 104, provided at a fixed or known location, may be part of another device and/or coupled to external devices 108 through networks 110 such as Internet, the Public Switched Telephone Network (PSTN), or the like. External devices 108 may include any suitable devices that can be communicatively coupled to first device 104 through networks 110, such as an application server. In some embodiments, location-based services may be provided by the external devices 108 when the location of second device 106 is determined. In some embodiments, first device 104 is part of another device that may provide location-based services based on the measurement result of distance 102.

First device 104 may include a control circuit 112, a memory 114, and a receiver(RX) 116, and an antenna 120. Control circuit 112 may be communicatively coupled to memory 114 and receiver 116. Antenna 120 may be communicatively coupled to receiver 116. Receiver 116 may receive a RF signal 118 through antenna. In some embodiments, RF signal 118 is a UWB signal and includes a RF packet that has a SYNC field and a STS field. Control circuit 112 may include any suitable software and/or hardware for controlling the functions of first device 104. For example, control circuit 112 may include a processor, such as a central processing unit (CPU), a graphics processing unit (GPU), and/or a microprocessor. Receiver 116, controlled by control circuit 112, may generate a CF, and receive and process RF signal 118 using the CF to generate a CIR estimate. In some embodiments, receiver 116 can perform a path recovery to obtain a reference CIR estimate. Alternatively, first device 104 may include a receiver (not shown) without a CF for generating the reference CIR estimate. Control circuit 112 may compare the CIR estimate and the reference CIR estimate to obtain FP information. Memory 114 may include a random-access memory (RAM), a read-only memory (ROM), an electrically erasable programmable ROM (EEPROM), an optical disk storage, a magnetic disk storage, and/or the like. Operating software, data, and/or signal symbols may be stored/buffered in memory 114 for use. For example, a STS may be stored/buffered in memory 114. Memory 114 can also be stored/buffered with other data for the processing such as SYNC in RF signal 118.

Second device 106 may include a portable computing device such as a smartphone, a laptop, a tablet, a wearable device, or the like. Although not shown, second device 106 may include a transmitter and an antenna 122 communicatively coupled together for sending signals such as RF signal 118. In some embodiments, second device 106 may also include a control circuit and a memory, communicatively coupled to the transmitter. The control circuit may include any suitable software and/or hardware for controlling the functions of second device 106. For example, the control circuit may include a processor, such as a CPU, a GPU, and/or a microprocessor. The memory may include a RAM, a ROM, an EEPROM, an optical disk storage, a magnetic disk storage, and/or the like. Operating software, data, and/or signal symbols may be stored in the memory for use. For example, The transmitter of second device 106, controlled by the control circuit, can generate RF signal 118 with a STS and a SYNC field, and transmits it to first device 104

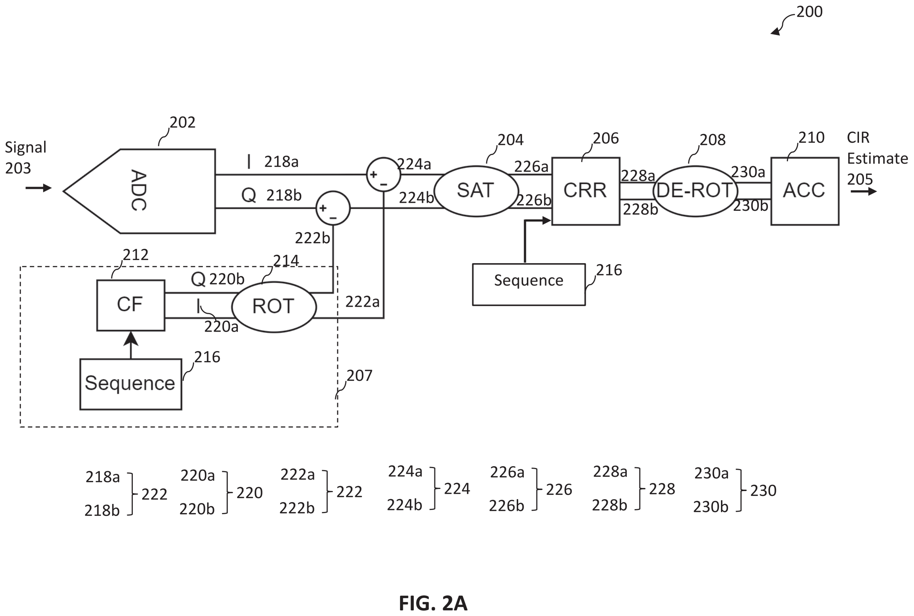

FIG. 2A shows the architecture of an example receiver 200 of the present disclosure. Receiver 200 may be an example of receiver 116. Receiver 200 may include an ADC 202, a saturation module 204 ("SAT"), a correlator 206 ("CRR"), a de-rotation module 208 ("DE-ROT"), and an accumulator 210 ("ACC"). Receiver 200 may also include a cancellation module 207 that includes a cancellation function 212 (CF) and a rotation module 214 (ROT). Cancellation module 207 may generate a cancellation signal to cancel out the sampled signal outputted by ADC 202. In some embodiments, receiver 200 may include an analog and RF and baseband (BB) processing circuit (not shown) that takes the received RF signal 118 (modulated in a carrier frequency and a BB frequency) and provides front-end processing (e.g., amplification, filtering, down conversion to a BB frequency) to generate a signal 203 (a BB signal).

ADC 202 may include an in-phase/quadrature (I/Q) sampling circuit 107. With input of signal 203, ADC 202 may output a sampled signal 218, which includes an in-phase component 218a (or I component for ease of description) and a quadrature component 218b (or Q component). The phase of I component 218a and Q component 218b differs by 90 degrees, and may constantly change according to the carrier frequency. In the present disclosure, it is assumed that sampled signal 218 may include the actual signal that contains a FP signal and/or a MP signal (e.g., the BB signal that includes the STS), random noise from the environment, any potential attack signal (possibly a strong signal with a high power/amplitude), etc.

Cancellation module 207 may generate a cancellation signal 222, including an I component 222a and a Q component 222b, configured to cancel sampled signal 218. Cancellation signal 222 may be generated by performing a rotation operation by a rotation module 214 on the CF output signal 220 (including an I component 220a and a Q component 220b) generated by CF 212. CF output signal 220 may be the output of CF 212 with a sequence 216 (e.g., the STS sequence shared by receiver 200 and the transmitter) as the input. In various embodiments, sequence 216 includes any suitable sequence with pseudo-random polarity used for secure ranging. For example, sequence 216 may include an IEEE 4z packet or a ranging integrity fragment (RIF) of 4ab multi-millisecond (MMS) packet. In some embodiments, sequence 216 may include any UWB sequence in general (even non-secure, like the SYNC or 4ab ranging sequence fragment (RSF)) to increase the dynamic range and/or improve ranging in NLOS conditions.

The coefficients of CF 212 may enable I component 220a and Q component 220b to be similar in amplitude to I component 218a and Q component 218b, respective. The rotation operation may include applying a phase shift on CF output signal 220, where the phase shift matches the phase difference between local oscillators of the transmitter and receiver 200. Cancellation signal 222 may then have a matching phase and amplitude with actual signal. In the present disclosure, it is assumed that the phase shift applied by rotation module 214 is known. In some embodiments, cancellation signal 222 may cancel any MP signal, in sampled signal 218, that can potentially interfere with the CIR estimate for the FP. In some embodiments, cancellation signal 222 may also cancel FP signal in sample signal 218.

As shown in FIG. 2A, I component 222a may be applied/subtracted from I component 218, and Q component 222b may be applied/subtracted from Q component 218b, to cancel out the actual signal, or cancel out as many signals as possible in sampled signal 218. A canceled signal 224 of the subtraction operation, including I component 224a and Q components 224b, may be ideally zero, although random noises and/or certain high-power attack signal may exist. In some embodiments, random noises and/or high-power attack signal in canceled signal 224 is not cancelled out by cancellation signal 222 because of their randomness and/or unpredictability.

Canceled signal 224 may then undergo a saturation operation by a saturation module 204. The saturation operation can saturate canceled signal 224 and thus limit the strengths/amplitude of any uncanceled attack signal and/or noise, in canceled signal 224. The signals lower than and/or higher than the extremities of the saturation levels are removed. In some embodiments, the saturation operation includes applying a saturation function on canceled signal 224. In some embodiments, the saturation function includes a suitable monotonic function, with the monotonic function within the saturation level. In some embodiments, the monotonic function includes a clipping function.

The saturated signal 226, having an I component 226a and a Q component 226b, and sequence 216 (e.g., the STS) may then undergo a cross-correlation by correlator 206 to generate a correlated signal 228, having an I component 228a and a Q component 228b. The correlated signal 228 may include similar actual signal as sampled signal 218 but with lowered/clipped noise signals, lowered/clipped attack signals, removed MP signals, and/or removed FP signal.

The correlated signal 228 may then undergo a de-rotation operation by de-rotation module 208, to remove the CFO in correlated signal 228, generating a de-rotated signal 230 (having an I component 230a and a Q component 230b). The phase of de-rotated signal 230 may thus be aligned with the local oscillator. De-rotated signal 230 may then be transmitted to an accumulator 210 to be accumulated, and a CIR estimate 205 may be generated. In some embodiments, CIR estimate 205 includes a channel response of sequence 216 with clipped attack signals (if any), lowered/clipped noise signals, eliminated FP signal, and eliminated MP signals.

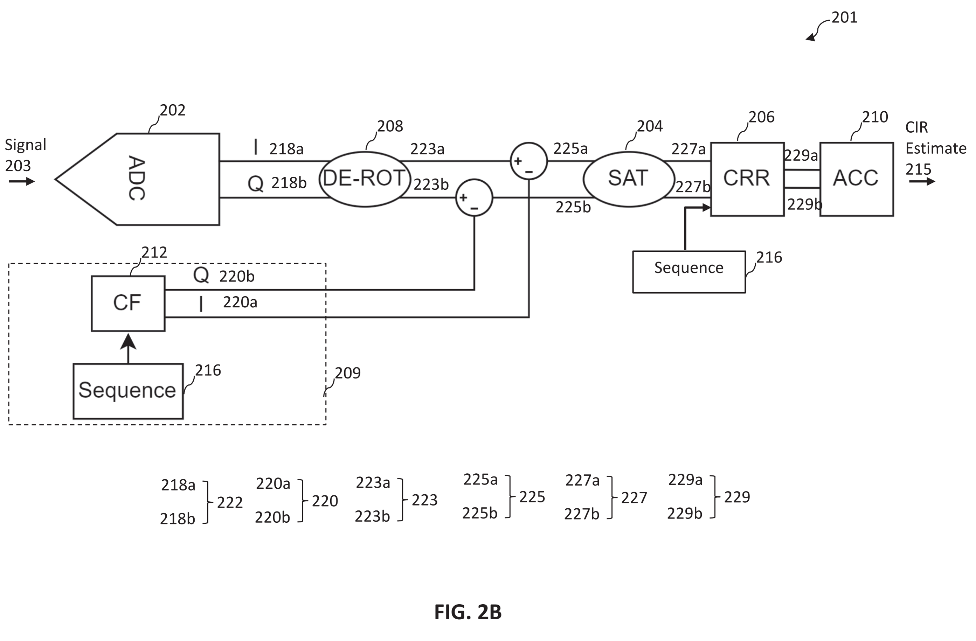

FIG. 2B shows the architecture of another example receiver 201 of the present disclosure. Receiver 201 may be an example of receiver 116. Receiver 201 may include an ADC 202, a saturation module 204, a correlator 206, a de-rotation module 208, and an accumulator 210. Receiver 201 may also include a cancellation module 209 that includes a CF 212. Cancellation module 209 may generate a cancellation signal to cancel out the sampled signal outputted by ADC 202. In some embodiments, receiver 201 may include an analog and RF and baseband (BB) processing circuit (not shown) that takes the received RF signal 118 (modulated in a carrier frequency) and provides front-end processing (e.g., amplification, filtering, down conversion to a BB frequency) to generate a signal 203 (a BB signal).

Similar to receiver 200, receiver 201 may output a sampled signal 218, with I component 218a and Q component 218b. Different from receiver 200, sampled signal 218 may undergo a de-rotation operation by de-rotation module 208 to remove CFO in sampled signal 218, such that the phase of sampled signal 218 is aligned with the local oscillator of receiver 201. De-rotation module 208 may generate de-rotated signal 223, with an I component 223a and a Q component 223b.

Meanwhile, cancellation module 209 may generate a cancellation signal that is equal to CF output signal 220, including an I component 220a and a Q component 220b, configured to cancel de-rotated signal 223. Different from receiver 200, the cancellation signal may not need to undergo a rotation operation due to that sampled signal 218 is already de-rotated to remove CFO. The cancellation signal (e.g., CF output signal 220) may be the direct output of CF 112 with a sequence 216 (e.g., the STS sequence shared by receiver 200 and the transmitter) as the input. Cancellation signal 220 may then have a matching phase and amplitude with de-rotated signal 223. In some embodiments, the cancellation signal may cancel any MP signal, in sampled signal 218, that can potentially interfere with the CIR estimate for the FP. In some embodiments, cancellation signal 220 may also cancel FP signal in sample signal 218.

The subtraction of the cancellation signal (e.g., CF output signal 220) from sampled signal 218 may generate a canceled signal 225 (including an I component 225a and a Q component 225b). Specifically, I component 220a may cancel I component 218a, and Q component 220b may cancel Q component 218b, to cancel out the actual signal. Canceled signal 225 may be ideally zero, although random noises and/or certain high-power attack signal may exist. In some embodiments, any random noises and/or high-power attack signal in remained in canceled signal 225 is not cancelled out by the cancellation signal because of their randomness and/or unpredictability.

Canceled signal 225 may then undergo a saturation operation by a saturation module 204. The saturation operation can saturate canceled signal 225 and thus limit the strengths/amplitude of any uncanceled attack signal and/or noise, in canceled signal 225. The signals lower than and/or higher than the extremities of the saturation levels are removed. In some embodiments, the saturation operation includes applying a saturation function on canceled signal 225. In some embodiments, the saturation function may be similar to that in receiver 200, and the detailed description is not repeated herein.

The saturated signal 227, having an I component 227a and a Q component 227b, and sequence 216 (e.g., the STS) may then undergo a cross-correlation by correlator 206 to generate a correlated signal 229, having an I component 229a and a Q component 229b. The correlated signal 229 may include similar actual signal as sampled signal 218 but with lowered/clipped noise signals, lowered/clipped attack signals, removed MP signals, and removed FP signal.

The correlated signal 229 may then be transmitted to an accumulator 210 to be accumulated, and a CIR estimate 215 may be generated. In some embodiments, CIR estimate 215 includes a channel response of sequence 216 with clipped attack signals (if any), lowered/clipped noise signals, eliminated FP signal, and eliminate MP signals.

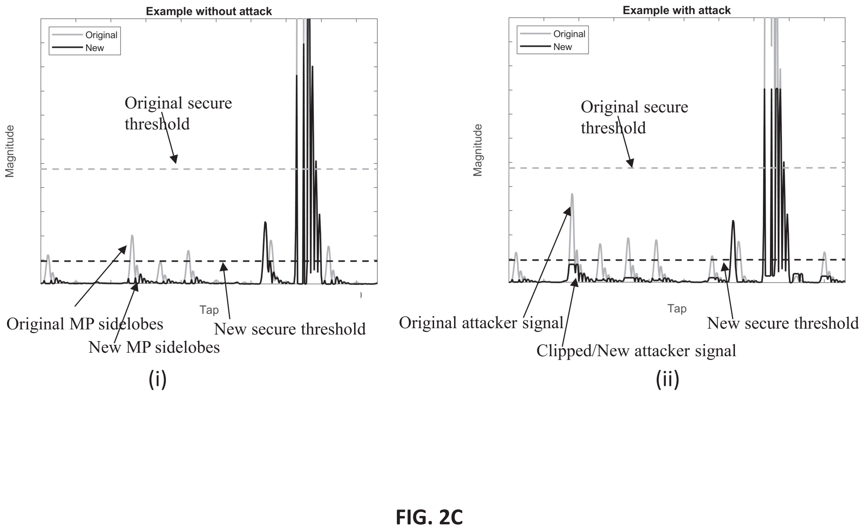

FIG. 2C shows CIR estimates obtained using the disclosed receiver ("New") and a convention receiver ("Original") (i) without an attack signal and (ii) with an attack signal. By using the disclosed receiver, the new secure thresholds are lower. Shown in (i) and (ii) of FIG. 2C, a RF channel with FP signal about 30 dB weaker than the MP signal. Using the disclosed receiver, a saturation level (SL) equal to 0.2 is used. The new FPDR improves approximately by 2+db(1/0.2) ≈ 16 dB from -17.5, -15.5, and -12.7 dB to -33.5, -31.5, and -28.7 dB for NEFA* = 2⁻⁴⁸, respectively. (i) shows the MP sidelobes are removed, and (ii) shows the stack sidelobes are clipped. It is noted that in the presence of an attack signal (ii), the attack sidelobes are clipped, guaranteeing security.

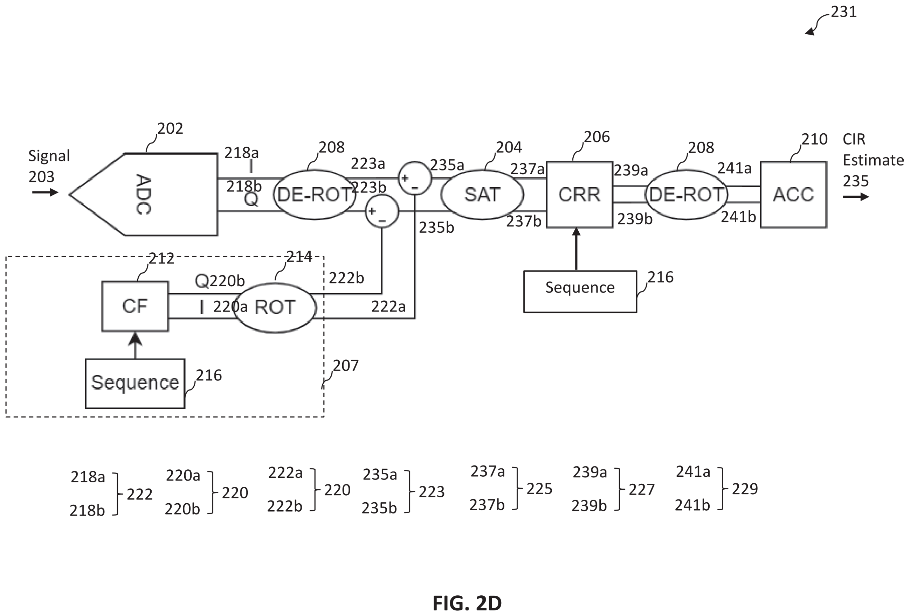

FIG. 2D shows the architecture of another example receiver 231 of the present disclosure. Receiver 231 may be configured to perform both time shift and phase shift.

The sampled signal 218 may undergo a phase de-rotation operation by the de-rotation module 208 to remove the phase rotation introduced by CFO in the sampled signal 218 and form a de-rotated signal 223 (with an I component 223a and a Q component 223b), such that the phase of de-rotated signal 223 is aligned with the local oscillator of receiver 231.

A cancellation signal 222 (with an I component 222a and a Q component 222b) may be generated by performing a rotation operation by a rotation module 214 on the CF output signal 220 (including an I component 220a and a Q component 220b) generated by CF 212. The rotation operation may include applying a time drift/shift on the CF output signal 220, where the time drift matches the time drift/shift between the local oscillators of the transmitter and receiver.

As a result of the de-rotation and rotation operations described above, the cancellation signal 222 may then have a matching phase and time with the received signal 203.

A canceled signal 235 of the subtraction operation, including I component 235a and Q components 235b, may be formed between de-rotated signal 223 and cancellation signal 222. Canceled signal 235 may be ideally zero, although random noises and/or certain high-power attack signal may exist. In some embodiments, random noises and/or high-power attack signal in canceled signal 235 is not cancelled out because of their randomness and/or unpredictability.

Canceled signal 235 may then undergo a saturation operation by a saturation module 204 to generate a saturated signal 237. The saturation operation can saturate canceled signal 225 and thus limit the strengths/amplitude of any uncanceled attack signal and/or noise, in canceled signal 225. The signals lower than and/or higher than the extremities of the saturation levels are removed. In some embodiments, the saturation operation includes applying a saturation function on canceled signal 225. In some embodiments, the saturation function includes a suitable monotonic function, such as a clipping function.

The saturated signal 237, having an I component 237a and a Q component 237b, and sequence 216 (e.g., the STS) may then undergo a cross-correlation by correlator 206 to generate a correlated signal 239, having an I component 239a and a Q component 239b. The correlated signal 239 may then undergo a de-rotation operation by de-rotation module 208, to remove the CFO in correlated signal 239, generating a de-rotated signal 241 (having an I component 241a and a Q component 241b). The phase and time of de-rotated signal 241 may thus be aligned with the local oscillator. De-rotated signal 241 may then be transmitted to an accumulator 210 to be accumulated, and a CIR estimate 235 may be generated. In some embodiments, CIR estimate 235 includes a channel response of sequence 216 with clipped attack signals (if any), lowered/clipped noise signals, eliminated FP signal, and eliminated MP signals.

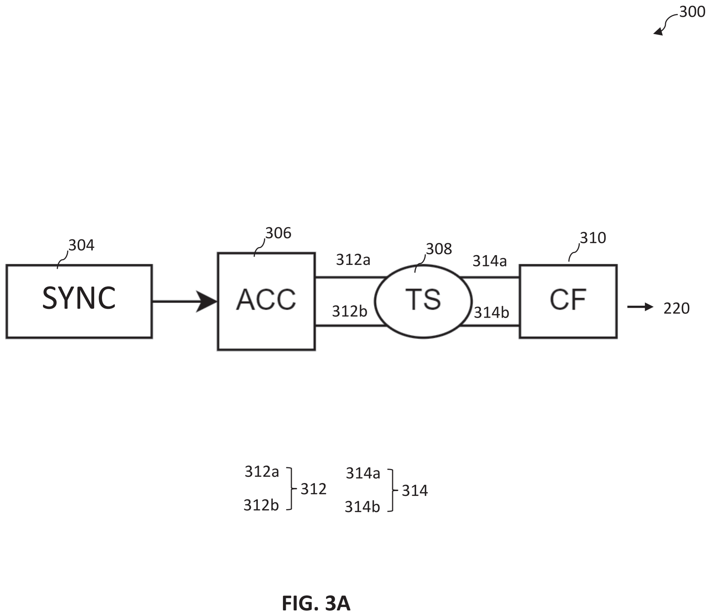

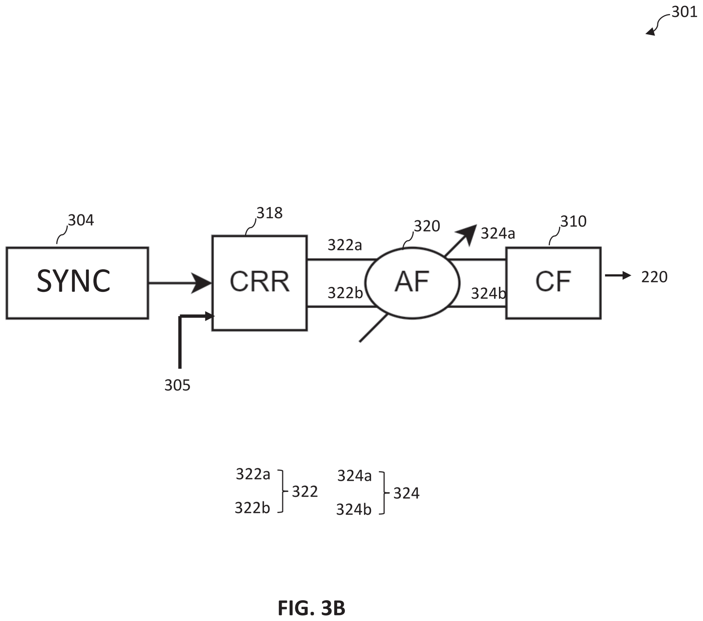

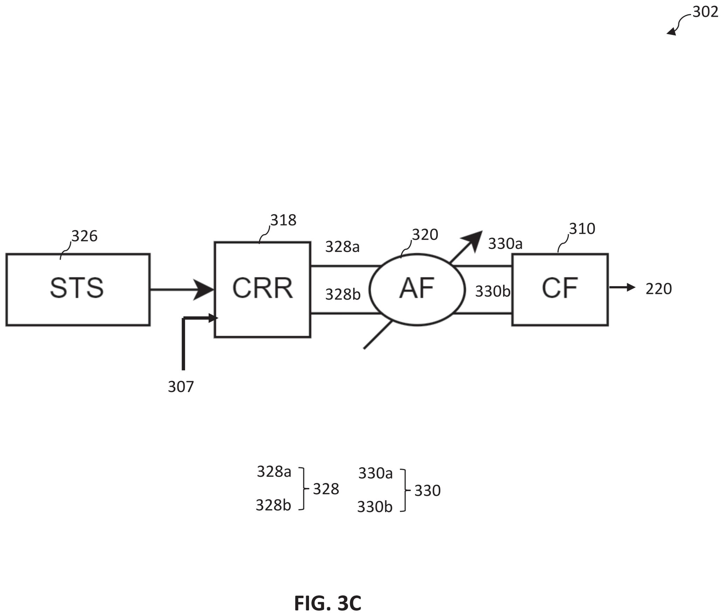

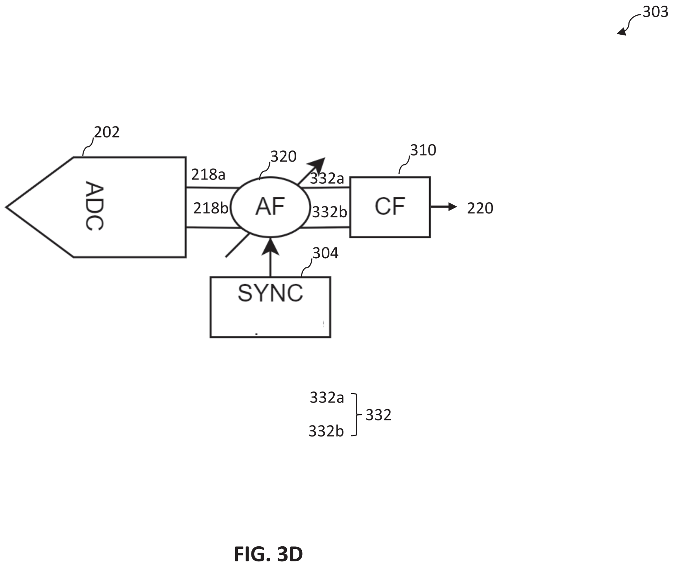

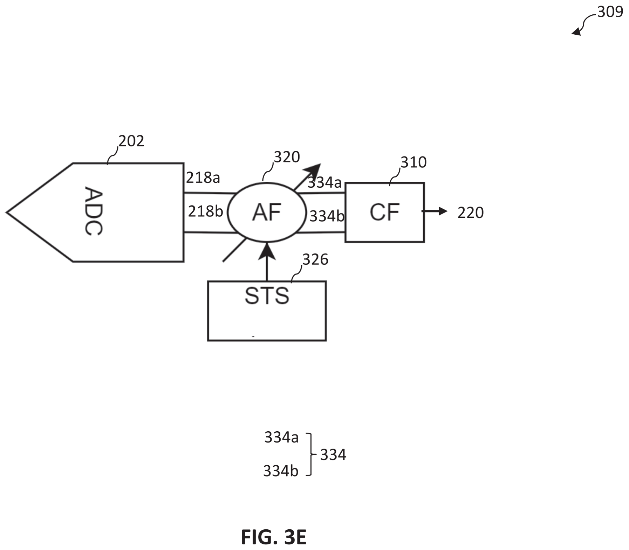

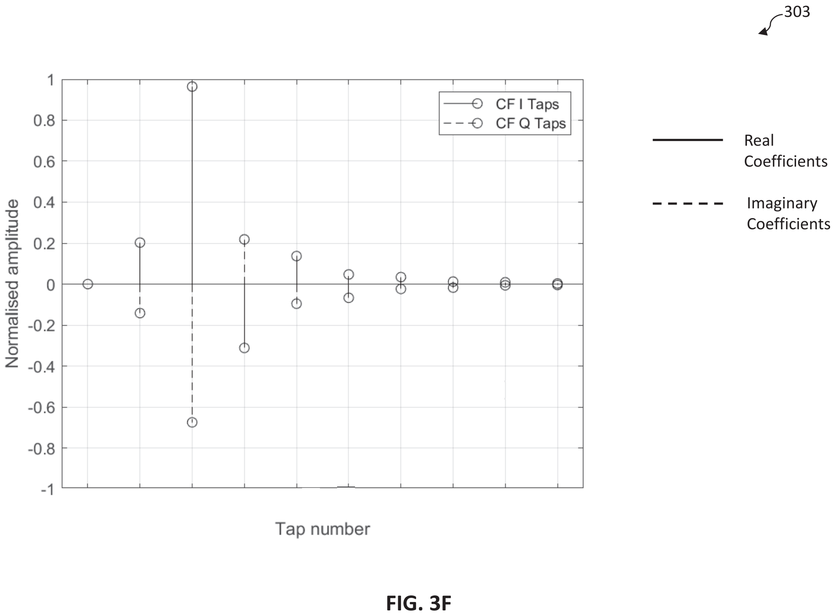

FIGS. 3A, 3B, 3C, 3D, and 3E respectively shows an example CF 310 generated by a respective CF generation module, 300, 301, 302, 303, and 309 according to some embodiments. CF 310 may be an example of CF 212 in receivers 200 and 201. FIGS. 3A, 3B, and 3C show that CF 310 may be estimated while receiving the RF signal (e.g., 118). In some embodiments, CF generation modules 300, 301, and 302 may automatically adapt to update the coefficients for CF 310, as continuing to receive RF signal 118, to maximize the cancellation of the signals (218 in FIG. 2A or 223 in FIG. 2B). In some embodiments, CF 310 is estimated using one of CF generation module 300, 301, and 302 in real-time (e.g., when receiving the RF signal 118 through the UWB channel) to generate coefficients that reflect the current UWB channel. Thus, CF 310 can adapt to achieve optimum cancellation of signals. In CF generation module 300, 301, and 302, the coefficients may be generated and applied on a suitable filter, e.g., a FIR filter, a double FIR filter, and/or a IIR filter, to form CIR 310. In some embodiments, the real coefficient refers to the real part of the complex number used in CF 310's transfer function, and is configured to modify the amplitude of the input signal (e.g., sequence 216). In some embodiments, the imaginary coefficient refers to the imaginary part of the complex number in CF 310's transfer function, and is configured to affect the phase of different frequency component of the input signal (e.g., sequence 216). FIG. 3F shows an example of a set of real coefficients and imaginary coefficients.

The proposed receivers avoid the performance loss by subtracting the samples above the saturation level before saturating the signal. This involves characterizing the magnitude, delay, and phase of these samples. Although not necessary, it is also possible to cancel the samples below the saturation level.

Typically, the strongest samples are grouped around the MP and can be captured by the coefficients of a relatively short FIR filter. However, in a MP environment, multiple strong paths could be received. Therefore, a longer filter or multiple filters could be used, or any other function or filter architecture that can generate the time domain signal from the known STS. For simplicity, in this disclosure, all these solutions may be referred to as a unique CF.

Several filter architectures can be devised. A complex finite impulse response (FIR) filter may directly represent the magnitude, delay, and phase of the samples to be cancelled. The filter may be formed as a poly-phase filter because the sequence has a rate that is typically 8 or 16 times lower than the sampling rate. The oscillatory nature of the downmixed UWB signal makes it suitable to be modelled by an IIR filter. The CF can be split into a block configured with the known pulse shape and a block that encodes the magnitude, delay, and phase of the MP or multiple samples to be cancelled. The pulse shape could be approximated by a square or triangle function. The pulse shape block may be an IIR filter, and the paths block an FIR filter.

The STS field is transmitted after the SYNC field. Therefore, the CF may be generated from the SYNC CIR, as shown in FIG. 3A. For example, the SYNC CIR samples above a certain threshold or within a window centered at the MP could be fed into the CF. This may be done at the end of the SYNC or during its reception when the CIR quality is deemed sufficient. Alternatively, adaptive algorithms could be used to estimate the CF during the SYNC reception (as shown in FIG. 3B) or during the STS reception (as shown in FIG. 3C). An example is the LMS algorithm to generate an FIR or IIR filter. The SYNC CIR could be used to initialize the filter for a faster convergence.

In some embodiments, additive random noise or other dithering techniques can be used during the generation or estimation of the CF. Alternatively or additionally, additive random noise or other dithering techniques can be used at the output of the CF, at the input of the ADC (analog domain), or at the output of the ADC (digital domain).

In some embodiments, CF 310 may be generated based on a SYNC CIR. As shown in FIG. 3A, the receiver (e.g., 200 or 201) may receive SYNC 304 (e.g., SYNC/synchronization filed) in the received RF packet (e.g., RF signal 118), and may accumulate SYNC 304 in an accumulator 306 ("ACC") to generate a SYNC CIR estimate 312 , which includes an I component 312a and a Q component 312b. A tap selection ("TS") operation 308 may then be performed based on the SYNC CIR estimate, to select the suitable tap numbers as the coefficients 314 of CF 310. In some embodiments, any tap larger than 0.5×SL is selected. For example, if SL is equal to 0.2, taps with an absolute value equal to or greater than 0.1×P is selected, P being the number of UWB pulses in the SYNC sequence. In some embodiments, if a predetermined number of X taps are to be selected, X strongest taps are selected regardless their magnitudes. In some embodiments, the strongest taps refer to those samples with highest complex magnitude. In case I and Q taps are processed independently, the magnitude refers to the absolute value of the real/imaginary sample. In some embodiments, X taps around the strongest tap are selected due to that the energy is typically concentrated in bursts. In some embodiments, the selected taps are above a predetermined threshold. In some embodiments, the coefficients 324 include imaginary coefficients 314a, and real coefficients 314b. Coefficients 314 may then be applied on one or more of a FIR filter, a double FIR filter, and/or a IIR filter, to form CIR 310. In some embodiments, because SYNC is received prior to STS, CF 310 may be generated/estimated before receiving STS or while receiving STS (e.g., 216). In some embodiments, CF generator module 300 involves minimum modification on a conventional receiver.

In some embodiments, CF 310 may be generated based on the cross-correlation of SYNC 304 (received) and the original SYNC 305 (known by both the transmitter and the receiver). In some embodiments, CF 310 may be generated during the reception of SYNC 304. As shown in FIG. 3B , the receiver (200 or 201) may receive SYNC 304 (e.g., SYNC filed) in the RF packet (e.g., part of RF signal 118), and may cross-correlate it with the original SYNC 305 in a correlator 318. Correlator 318 may output a correlated signal 322, which as an I component 322a and a Q component 322b. Correlated signal 322 may then be applied with an adaptive filter (AF) 320, which includes an adaptive algorithm such as least mean squares (LMS). AF 320 may generate coefficients 324 of CF 310. In some embodiments, the input of correlator 318 (sequence of pulses in the time domain, e.g., 304 and 305) may be used as the error input of an adaptive filter loop (e.g., 320). AF 320 adapts until the signal is correctly cancelled. In some embodiments, the adaptive filtering should be done before the saturation module (e.g., 204). In some embodiments, the output of correlator 318 (compressed pulse in the accumulator domain) may be as well used to drive an adaptive filter (e.g., 320) in a similar fashion. In this case, the saturation module (e.g., 204) should be turned off while the filter adapts. In some embodiments, the coefficients 324 include imaginary coefficients 324a, and real coefficients 324b. Coefficients 324 may then be applied on one or more of a FIR filter, a double FIR filter, and/or a IIR filter, to form CIR 310.

In some embodiments, CF 310 may be generated based on the cross-correlation of STS 326 (received) and the original STS 307 (known by both the transmitter and the receiver). In some embodiments, CF 310 may be generated during the reception of STS 326. As shown in FIG. 3C, the receiver (e.g., 200 or 201) may receive STS 326 in the RF packet (e.g., part of RF signal 118), and may perform a cross-correlation between STS 326 and the original STS 307 in cross-correlator 318. Correlator 318 may output a correlated signal 328, which as an I component 328a and a Q component 328b. Correlated signal 328 may then be applied with an adaptive filter (AF) 320, which includes an adaptive algorithm such as least mean squares (LMS). AF 320 may generate coefficients 330 of CF 310. In some embodiments, the coefficients 330 include imaginary coefficients 330a, and real coefficients 330b. Coefficients 330 may then be applied on one or more of a FIR filter, a double FIR filter, and/or a IIR filter, to form CF 310. In some embodiments, CFO generator module 302 does not rely on the SYNC, making the SYNC and STS reception independent. CFO generator module 302 may automatically correct cancellation errors. For example, if the carrier recovery is not perfect, the de-rotation may be inaccurate, but the adaptive filter (e.g., 320) can compensate for this leading to better cancellation.

In some embodiments, time domain signals, instead of the signals after cross-correlation, can also be used as the input to AF 320 to generate coefficients 332 of CF 310. FIGS. 3D and 3E each shows an example. As shown in FIG. 3D, in CF generation module 303, output of ADC 202 (e.g., sampled signal 218 including I component 218a and Q component 218b, time domain signals) can be the input of AF 320, which generates coefficient 332 (including imaginary coefficients 320a and real coefficients 320b) based on the received SYNC 304. In some embodiments, AF 320 includes a feedback mechanism that adjusts coefficients 332 based on the difference between the sampled signal 218 and output signal 220 of CF 310. For example, AF 320 may adjust coefficients 332, generated based on SYNC 304 that is continuously being received, until the difference is substantially zero or below a predetermined threshold. As shown in FIG. 3E, in CF generation module 309, sampled signal 218 can also be the input of AF 320, which generates coefficient 334 (including imaginary coefficients 320a and real coefficients 320b) based on the received STS 326 that is continuously being received. In some embodiments, the feedback mechanism of AF 320 adjusts coefficients 334 based on the difference between sampled signal 218 and output signal 220 of CF 310 until the difference is substantially zero or below a predetermined threshold.

In some embodiments, the transmitter and the receiver (e.g., 200 or 201) have a residual carrier frequency offset (CFO) after downconversion from an RF frequency. Suitable corrections might be implemented to achieve a better cancellation of the I/Q components. At lower CFO, the cancellation may be stopped at a fraction of the STS field to avoid adding a signal instead of cancelling it. At higher CFO, de-rotation and resampling techniques may be applied.

The rotation may modify the CF function, or be applied to the CF output, as shown in FIG.2A (e.g., 220). Alternatively, the de-rotation may be applied directly to the ADC output, as shown in FIG. 2B (e.g., 218). In this case, the de-rotation after the correlator is not necessary. It can be proven that S = sqrt(P) if the FP has a phase equal to 0. Therefore, the scheme of FIG. 2B may be used to guarantee a FP (FP) phase equal to 0 and improve the dynamic range (DR) by 3 dB. The de-rotation may include resampling, to follow the time shift between the two streams (ADC output and CF output).

The rotation and/or de-rotation may be performed in units of 512 chips, where 1 chip is about 2 ns. The cancellation may be stopped at a fraction of the unit to avoid adding a signal instead of cancelling it. The fraction could be selected depending on the estimated CFO. The rotation and/or de-rotation may be performed in blocks of samples or fractions of a unit. If the de-rotation takes place after the correlator as shown in FIG 2A, the correlator may also be split in fractions of a unit. The fraction may be a power of 2, and higher powers could be dynamically selected depending on the estimated CFO. To the limit, the de-rotation and rotation may be applied to each complex sample.

Although the present disclosure focuses on the cancellation in the digital domain, the same method can also be applied in the analog domain, before the mixer or in the baseband.

Methods to perform the cancellation in the analog domain may include but are not limited to the use of one or multiple digital-to-analog converters (DACs), the re-use of the transmitter side of the device transceiver, the fast adaptation of the ADC input DC offset to follow the signal that needs to be cancelled, and the use of multiple ADC with different DC offsets multiplexed to select the correct DC offset for each sample.

In various embodiments, the residual signal at the input of the saturation module can be equal to, less than, or greater than the saturation level (SL). A residual signal higher than, equal to, or less than the SL is not disruptive for the method as security is still guaranteed. The SL could be dynamically selected based on the residual signal. For example, if the SL=0.2, samples up to 0.3 may not need to be clipped/saturated. The max number of samples allowed to cross the SL and the max level that cannot be trespassed (0.3 in this example) may be parameters of the SL, configurable depending on the NEFA*. Of course, in some embodiments, the final secure threshold must be adapted according to the number of samples that were saturated at 0.3. The same idea could be extended to multiple levels (0.2, 0.3, 0.4, ...), with an associated max number of samples allowed to touch that level.

In some embodiments, quantization may be applied before cancellation to match the quantization level of the ADC output. In some embodiments, quantization may be applied after cancellation to match the correlator input. In some embodiments, quantization may be applied both before and after the cancellation. Depending on the de-rotation and/or rotation scheme(s) utilized, quantization may be applied before or after the de-rotator (or rotation), or both.

If the cancellation is performed in the analog domain, the saturation may be performed in the analog domain by lowering the ADC full-scale range and/or by increasing the signal gain. Alternatively, the cancellation may be performed in the digital domain as described in this disclosure. If the cancellation is performed in the digital domain, the saturation may be performed in the digital domain as described in this disclosure. Any saturation or loss of linearity in analog domain or, in general, before the cancellation may result in a performance loss if the clipped samples collide with the FP.

The saturation level (SL) may be selected according to the NEFA level required (NEFA*). The lower the NEFA*, the more DR may be recovered, hence the lower SL. A higher SL relaxes the constraints on the cancellation, which can be less optimal. Equivalently, the saturation extremes may be fixed to +/-1 or any other fixed value, and the signal may be scaled by 1/SL or a similar scaling factor digitally or by applying a 1/SL gain to the analog chain.

The saturation function (SF) may include any monotonic function that does not exceed the SL. For example, the SF may be a clip function that sets any positive sample equal to or larger than SL equal to SL, and any negative sample equal to or smaller than -SL equal to -SL.

Although keeping the information on the unsaturated samples is not a strict requirement, it allows the application of the disclosed steps only at those lags in the critical search window (CSW). At the lags outside the CSW, the original correlator - CIR block could be kept unchanged. For example, if the CF is calculated from the SYNC field as shown in FIG. 3A, the CF may easily be attacked to introduce a false MP. During the STS field, cancellation of the non-existent MP will introduce a false feature. However, because the CSW is always before the MP, the only effect within the CSW is the injection of sidelobes. If the SF is also applied at those lags corresponding to the CF, a careful channel impulse analysis (CIA) is required to exclude the false MP injected by the wrong CF.

The samples after the cancellation are typically stored in a buffer or a digital delay line. The SF may be applied "on the go" when the correlator reads the stored samples. In this way, information on the samples before saturation can be maintained in the buffer. For example, if the samples are stored as binary numbers, the SF may be the OR between all bits, effectively setting every number above the least significant bit (LSB) equal to the LSB. If the correlator processes the bits of the samples independently, saturation may be achieved by only considering the LSB. Alternatively, the unsaturated samples may be stored in a second buffer or delay line, or the full architectures shown in FIGS. 2A and 2B may be an additional block, with the original correlator - CIR block working on the unsaturated samples (e.g., for reference CIR estimate).

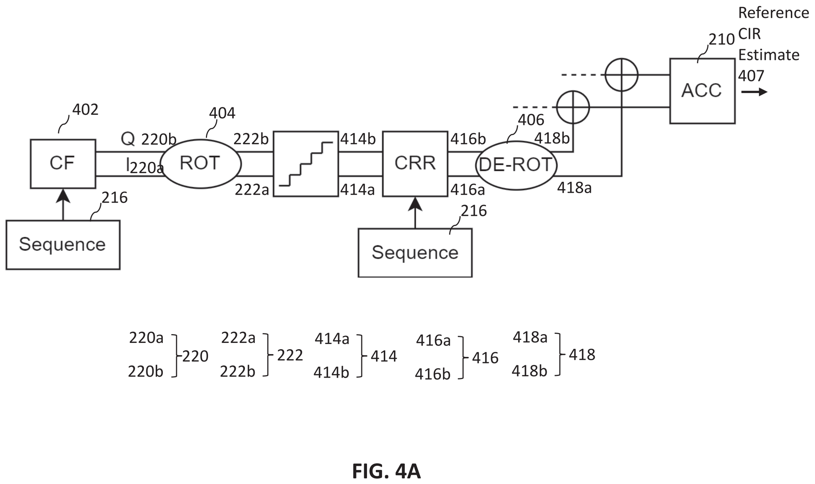

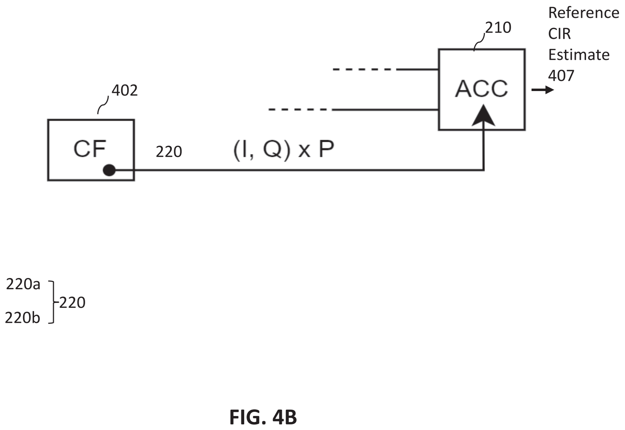

FIGS. 4A and 4B shows two example path recovery modules 400 and 401, according to embodiments of the present disclosure. Path recovery modules 400 and 401 may recover any signals cancelled or clipped/saturated in the receivers 200 and 201, and may be employed as an additional part/branch of receiver 200/201 communicatively coupled to accumulator 210. Accumulator 210 may then output a reference CIR estimate with recovered information on noise, attack signals, MP signals, and FP signal. The reference CIR estimate may be compared with CIR 205/215 to extract more accurate information on the FP signal. In some embodiments, in path recovery modules 400 and 401, CF 402 may be an example of CF 212.

In path recovery module 400, CF 402 may output a CF output signal 220 with sequence 216 (STS) as the input. CF output signal 220 may undergo a rotation operation by a rotation module 404 (similar to rotation module 214) to align its phase with the incoming signal 203, as described in FIG. 1A. The rotated signal 222 may then undergo a quantization and/or resampling process (to generate a quantized signal including an I component 414a and a Q component 414b), and be cross-correlated with the known STS sequence 216 to generate a correlated signal 416 (including an I component 416a and a Q component 416b). The correlated signal 416 (having an I component 416a and a Q component 416b), may then undergo a de-rotation operation (to generate a de-rotated signal 418 that includes an I component 418a and a Q component 418b) by de-rotation module 406 (similar to de-rotation module 208) to remove the CFO and align the phase of correlated signal 416 with the local oscillator of the receiver (e.g., 200 or 201). The de-rotated signal 418, may be transmitted to accumulator 210 as an input. Accumulator 210 may accumulate de-rotated signal 418 to generate a reference CIR estimate 407, which can be compared with CIR estimate 205 to extract information for the FP signal, and/or other post-accumulation processing.

In path recovery module 401, different from that of path recovery module 400, CF output signal 220 may not undergo rotation or de-rotation operations. CF output signal 220 may be scaled by P (e.g. P being the number of UWB pulses in the STS sequence) to form a scaled signal 418 (having an I component 418a and a Q component 418b), which is transmitted to accumulator 210 as an input. Accumulator 210 may then accumulate scaled signal 418 and output a reference CIR estimate 407, which can be compared with CIR estimate 205 to extract information for the FP signal, and/or other post-accumulation processing.

In various embodiments, path recovery modules 400 and 401 may be part of receiver 200/201, and may share the same accumulator (e.g., 210). For example, inputs of accumulator 210 may include signals that undergone cancellation processing (e.g., 230, 229), and signal without cancellation processing (e.g., 416, 418). The outputs of accumulator 210 may include CIR estimates with certain signals clipped/reduced/eliminated (e.g., 205, 207), and reference CIR estimates with all signals preserved/recovered. The CIR estimates and the reference CIR estimates can be compared to extract more accurate FP signals as well as other information about the RF channel.

In some embodiments, receiver 200/201 may not have include a path recovery module, and accumulator 210 does not output any reference CIR estimate. Instead, another receiver, e.g., a conventional receiver without a signal cancellation function, may be operated in parallel to generate a reference CIR estimate.

In some embodiments, it may be desirable to recover the information removed by the cancellation. For example, if no FP path is present, it may be desirable to detect the MP. Without the methods disclosed in this section, a careful CIA is required to detect the cancelled MP.

The uncancelled samples (ADC output such as 218) may be stored in a second buffer or delay line, or the full architectures shown in FIG. 2A and 2B may be an additional block, with the original correlator - CIR block working on the uncancelled samples to obtain a reference CIR estimate.

Alternatively, the CF coefficients may be directly added to the corresponding lags in the CIR, after scaling by the total number of UWB pulses in the STS sequence, P, as shown in FIGS. 4A and 4B. If the de-rotation and/or rotation solution is similar to FIG. 2A and quantization is applied after the rotator or before the correlator, the path recovery (PR) solution shown in FIG. 4A may be used, where quantization is applied after the rotation module. Alternatively, the PR solution shown in FIG. 4B may be used. In both cases, if the solution shown in FIGS. 2A and 2B involve quantization before the CIR, the solution shown in FIGS. 4A and 4B may also have quantization before the CIR for a more optimal PR result.

If the CF is determined from the SYNC field as shown in FIG. 3A, it could easily be attacked to introduce a false MP. During the STS field, cancellation of the non-existent MP will introduce a false feature. In this case, PR will automatically remove the false feature. However, if the saturation is applied to the samples for those lags corresponding to the CF, the PR solution shown in FIGS. 4A and 4B may have an additional saturation step. Otherwise, PR will introduce an opposite unsaturated feature, and a careful CIA would be required to exclude the false MP injected by PR.

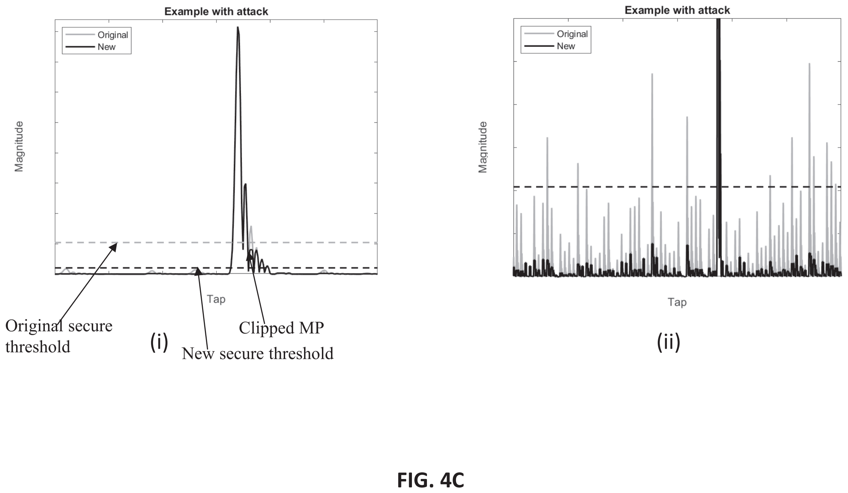

FIG. 4C shows the path recovery results in the absence of an FP and with one MP and an attack signal. (a) shows that after the proposed path recovery, the new secure threshold for NEFA*=2⁻⁴⁸ is lower, and the MP is unaffected. (b) is an enlarged image of (a) and shows the sidelobes of the attack signal are clipped. It can be noticed from (a) that one of the MP post-cursors is clipped after the application of the method.

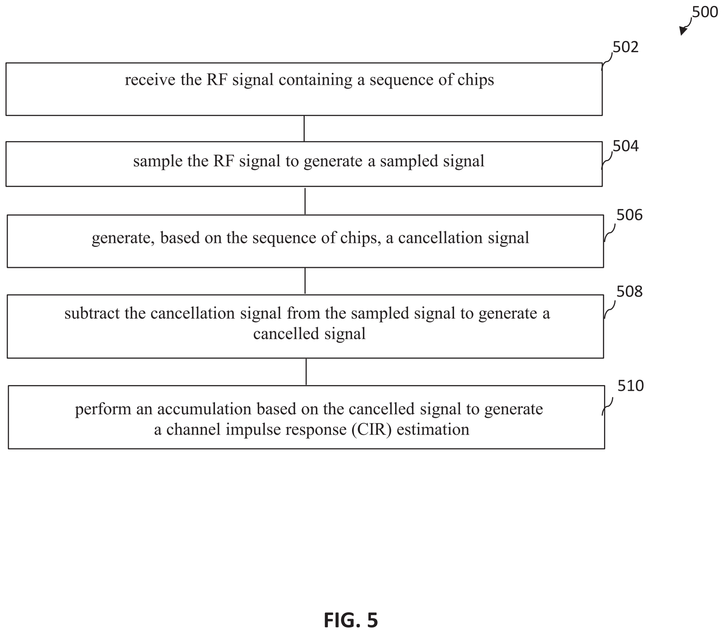

FIG. 5 is a flowchart of a method 500 for processing a signal by a receiver (e.g., 200 and/or 201), according to some embodiments of the present disclosure. Method 500 is merely an example, and is not intended to limit the present disclosure beyond what is explicitly recited in the claims. Additional operations can be provided before, during, and after the method 500, and some operations described can be replaced, eliminated, or moved around for additional embodiments of method 500. For ease of illustration, FIG. 5 is described in connection with FIGS. 2A and 2B.

At step 502, a signal (e.g., 203) having a sequence of chips is received.

At step 504, the signal is sampled to generate a sampled signal (e.g., 218).

At step 506, based on the sequence of chips, a cancellation signal (e.g., 222 or 220) is generated.

At step 508, the cancellation signal is subtracted from the sampled signal to generate a cancelled signal (e.g., 224 or 225).

At step 510, an accumulation (e.g., 210) is performed based on the cancelled signal to generate a channel impulse response (CIR) estimation (e.g., 205 or 215).

It should be noted that, in the present disclosure, at least one of the operations (e.g., de-rotation, saturation, cross-correlation, accumulation, rotation, etc.) performed by a receiver or a module (e.g., 200, 201, 400, and 401) are implemented by a specialized hardware (such as an application-specific integrated circuit (ASIC) and/or a digital signal processor (DSP)), and/or or a general processor.

Thus, from one perspective, there has now been described a method for processing a RF signal. The method includes receiving the signal having a sequence of chips, sampling the signal to generate a sampled signal, generating, based on the sequence of chips, a cancellation signal, subtracting the cancellation signal from the sampled signal to generate a cancelled signal, and performing an accumulation based on the cancelled signal to generate a channel impulse response (CIR) estimation.

Those skilled in the art will recognize improvements and modifications to the preferred embodiments of the present disclosure. All such improvements and modifications are considered within the scope of the concepts disclosed herein and the claims that follow.

## Claims

1. A method for processing a signal, comprising:
receiving the signal comprising a sequence of chips;
sampling, by an analog-to-digital converter (ADC), the signal to generate a sampled signal;
generating, based on the sequence of chips, a cancellation signal;
subtracting the cancellation signal from the sampled signal to generate a cancelled signal; and
performing an accumulation based on the cancelled signal to generate a channel impulse response (CIR) estimation.

2. The method of claim 1, wherein the subtracting of the cancellation signal from the sampled signal comprises:
subtracting a real component of the cancellation signal from a real component of the sampled signal; and
subtracting an imaginary component of the cancellation signal from an imaginary component of the sampled signal.

3. The method of claim 1 or claim 2, wherein the generating of the cancellation signal comprises:
applying a cancellation function (CF) on the sequence of chips to generate an initial cancellation signal that comprises a real component and an imaginary component; and
applying an rotation operation on the real component and the imaginary component of the initial cancellation signal to apply a phase offset on the initial cancellation signal and generate the cancellation signal, such that a phase of the cancellation signal matches a phase of the sampled signal.

4. The method of claim 2 or claim 3 when dependent on claim 2, wherein the sampling of the signal to generate the sampled signal comprises:
sampling the signal to generate an initial sampled signal that comprises a real component and an imaginary component; and
performing a de-rotation operation on the real component and the imaginary component of the initial sampled signal to remove a carrier frequency offset (CFO) and generate the sampled signal.

5. The method of any preceding claim, further comprising applying a saturation operation on the cancelled signal to generate a saturated signal, wherein an amplitude of the saturated signal is equal to or lower than a saturation level.

6. The method of claim 5, wherein the applying of the saturation operation comprises applying a monotonic function on the cancelled signal, the monotonic function being within the saturation level.

7. The method of claim 6, wherein the monotonic function comprises a clipping function.

8. The method of any of claims 5 to 7, further comprising performing a cross-correlation operation between the saturated signal and the sequence of chips to generate a correlated signal.

9. The method of claim 8, further comprising performing a de-rotation operation to remove a carrier frequency offset (CFO) and generate a de-rotated signal as an input of an accumulation operation to generate the CIR estimation.

10. The method of claim 8 or claim 9, further comprising performing an accumulation using the correlated signal as an input to generate the CIR estimation.

11. An ultra-wideband (UWB) device, comprising a UWB receiver comprising an analog-to-digital converter (ADC), wherein the receiver is configured to:
receive, at the ADC, a signal comprising a sequence of chips;
sample, by the ADC, the signal to generate a sampled signal;
generate, based on the sequence of chips, a cancellation signal;
subtract the cancellation signal from the sampled signal to generate a cancelled signal; and
perform an accumulation based on the cancelled signal to generate a channel impulse response (CIR) estimation.

12. The UWB device of claim 11, wherein to subtract the cancellation signal from the sampled signal comprises:
subtracting a real component of the cancellation signal from a real component of the sampled signal; and
subtracting an imaginary component of the cancellation signal from an imaginary component of the sampled signal.

13. The UWB device of claim 11 or claim 12, wherein to generate the cancellation signal comprises:
applying a cancellation function on the sequence of chips to generate an initial cancellation signal that comprises a real component and an imaginary component; and
applying an rotation operation on the real component and the imaginary component of the initial cancellation signal to apply a phase offset on the initial cancellation signal and generate the cancellation signal, such that a phase of the cancellation signal matches a phase of the sampled signal.

14. The UWB device of claim 12 or claim 13 when dependent on claim 12, wherein to sample, by the ADC, the signal to generate the sampled signal comprises:
sampling, by the ADC, the signal to generate an initial sampled signal that comprises a real component and an imaginary component; and
performing a de-rotation operation on the real component and the imaginary component of the initial sampled signal to remove a carrier frequency offset (CFO) and generate the sampled signal.

15. A computer-readable medium (CRM) having program code encoded thereon, the program code comprising:
code for causing an ultra-wideband (UWB) device to receive a signal comprising a sequence of chips;
code for causing the UWB device to sample the signal to generate a sampled signal using an analog-to-digital converter (ADC);
code for causing the UWB device to generate, based on the sequence of chips, a cancellation signal;
code for causing the UWB device to subtract the cancellation signal from the sampled signal to generate a cancelled signal; and
code for causing the UWB device to perform an accumulation based on the cancelled signal to generate a channel impulse response (CIR) estimation.
